# EUROPÄISCHE PATENTSCHRIFT

(11) **EP 3 375 739 B1**
(45) Veröffentlichungstag und Bekanntmachung des Hinweises auf die Patenterteilung: **31.07.2019**
(21) Anmeldenummer: 18160453.9
(22) Anmeldetag: 07.03.2018
(51) Int. Cl.: B65G 63/00, B65G 21/12, B65G 47/71

(54) **VORRICHTUNG ZUM UMSCHLAGEN VON STÜCKGUT**
DEVICE FOR HANDLING PIECE GOODS
DISPOSITIF DE MANIPULATION DE MARCHANDISES EN VRAC

(30) Priorität: 14.03.2017 DE 102017105336
(43) Veröffentlichungstag der Anmeldung: 19.09.2018
(73) Patentinhaber: Lippert GmbH & Co. KG, 92690 Pressath (DE)
(72) Erfinder: Hoch, Günther, 92637 Weiden (DE)
(74) Vertreter: Louis Pöhlau Lohrentz

(56) Entgegenhaltungen:
- EP-A1- 3 020 663
- JP-A- H 092 667

## Beschreibung

Die Erfindung betrifft eine Vorrichtung zum Umschlagen und/oder Sortieren von Stückgut gemäß den Merkmalen des Oberbegriffs des Anspruchs 1.

In der Praxis werden solche Vorrichtungen von Logistikunternehmen verwendet, um Waren oder Stückgüter entlang unterschiedlicher, sich kreuzender Transportketten zu transportieren. An Verkehrsknotenpunkten, an denen sich mehrere Transportketten treffen, werden solche Vorrichtungen zum Umschlagen und/oder Sortieren von Stückgut eingerichtet, sodass einzelne Pakete oder Stückgut flexibel von einem beliebigen Sender zu einem beliebigen Empfänger transportiert werden können.

EP3020663 offenbart eine Vorrichtung zum Umschlagen und /oder Sortieren von Stückgut nach dem Oberbegriff des Anspruchs 1.

Die EP 2 396 253 B1 zeigt ein Lagersystem und ein Verfahren zum automatisierten Verteilen von Packeinheiten. Einzelne Packeinheiten werden auf einen Bereitstellungsplatz befördert, wobei in Förderrichtung Reihen gebildet werden, die zu einer Transportlage zusammengestellt werden. Diese Transportlagen werden dann von einem Verteilsystem auf eine Förderfläche übernommen und von dort aus auf verschiedene Lagerstellen verteilt.

Aus der EP 0 599 841 B1 ist eine Vorrichtung zum Umschlagen von Containern bekannt. Diese Vorrichtung weist ein Hochregallager auf und mehrere Verladestationen, um Container mittels eines Krans und einer rechnergestützten Steuerung in dem Hochregallager zwischenzulagern und auf neue Transporteinheiten umzulagern.

Die DE 196 15 073 A1 zeigt eine Vorrichtung zum Beladen von Containern mit kommissionierten Waren auf Transporteinheiten, beispielsweise Paletten. Hier wird kommissionierte, insbesondere palettierte Ware einer laufenden Produktion entnommen und einer Verladeeinrichtung zugeführt. An der Verladeeinrichtung werden diese Waren dann in Container geladen. Anschließend werden die beladenen Container über einen Hubkran auf Fahrzeuge verladen und zu einem Bestimmungsort transportiert.

Die Aufgabe der vorliegenden Erfindung ist es, eine Möglichkeit zu schaffen, so dass bei möglichst geringem Platzbedarf eine hohe Sortierleistung beim Umschlagen und/oder Sortieren von Stückgut, welches in Containern verladen ist, erzielt wird.

Diese Aufgabe wird erfindungsgemäß durch eine Vorrichtung gemäß den Merkmalen des Anspruchs 1, sowie durch ein Verfahren gemäß den Merkmalen des Anspruchs 12 gelöst.

Es ist erfindungsgemäß vorgesehen, dass das zu sortierende oder umzuschlagende Stückgut in Container verladen und/oder aus Container entladen wird. Die Vorrichtung zum Umschlagen und/oder Sortieren von Stückgut umfasst mehrere Beladeboxen, um eine Container mit Stückgut zu beladen, sowie mehrere Entladeboxen, um Stückgut aus einem Container zu entladen. Ferner ist ein Sortierband vorgesehen, um Stückgut von einer Entladebox zu einer Beladebox zu transportieren, sowie eine Containertransporteinrichtung, um Container zwischen einem Fahrzeug und/oder einer Entladebox und/oder einer Beladebox zu transportieren, wobei das Sortierband ein Haupttransportband und mehrere von diesem abzweigende Entladebänder aufweist, die jeweils zumindest eine Entladebox an das Haupttransportband anschließen. Wesentlich ist, dass eine Entladebox jeweils zumindest ein Entladeband aufweist, welches so angeordnet ist, dass es entlang einer Längsseite eines in der Entladebox befindlichen Containers verläuft und quer verschiebbar ausgebildet ist, um den Abstand zwischen Container und dem Entladeband einzustellen. Diese Anordnung ermöglicht es, dass mehrere Personen einen Container gleichzeitig beladen und entladen, indem diese an der Längsseite des Containers nebeneinander arbeiten. Dadurch wird die Entladekapazität deutlich verbessert. Über die Containertransporteinrichtung können die Container vorteilhafterweise zu den Entladeboxen bzw. Beladeboxen transportiert werden, ohne dass es dazu notwendig ist, die Entladeboxen bzw. Beladeboxen mit einem Fahrzeug zu befahren. Daher ist es möglich, die Entladeboxen und/oder Beladeboxen räumlich eng benachbart anzuordnen, wodurch insgesamt der Platzbedarf sinkt.

Vorzugsweise wird unter Stückgut einzelnes Transportgut verstanden, welches sich an einem Stück einzeln transportieren lässt. Darunter kann auch in Kisten oder in Pakete verpacktes Schüttgut fallen. Als Containertransporteinrichtung kann beispielsweise ein Kran verwendet werden, mit dem einzelne Container angehoben und entlang einer Richtung geradlinig transportiert werden können. Als Sortierband kann eine Förderstrecke für Stückgut eingesetzt werden, die ein Förderband und/oder eine Rollenfördereinrichtung zum automatisch angetriebenen Transport einzelner Pakete oder Stückgut aufweist. Ein Entladeband kann ebenfalls ein automatisch gesteuertes und/oder angetriebenes Förderband und/oder eine entsprechende Rollenfördereinrichtung aufweisen.

Insbesondere kann vorgesehen sein, dass die Länge des Entladebandes an die Länge eines Containers angepasst ist. Das heißt, dass die Länge des Entladebandes mindestens so lang ist, wie die Länge eines zu entladenden und/oder beladenden Containers oder eines längsten zu entladenden und/oder beladenden Containers.

Um den zu Verfügung stehenden Platz möglichst optimal auszunutzen, kann vorgesehen sein, dass eine Entladebox zwei zueinander parallel verlaufende und voneinander beabstandete Entladebänder aufweist, die derart voneinander beabstandet sind, dass ein Container zwischen den beiden Entladebändern anordenbar ist. Der Abstand der Entladebänder wird dabei derart bemessen, dass ein Container zwischen zwei Entladebändern aufgestellt werden kann und zudem zwischen Container und Ladeband eine Arbeitsfläche für Bedienpersonal verbleibt.

Es ist vorgesehen, dass zumindest eines der Entladebänder oder mehrere der Entladebänder quer verschiebbar ausgebildet ist bzw. sind, um einen Abstand zwischen Container und Entladeband einzustellen. Über das quer verstellbare Entladeband ist es möglich, den Bereich der Arbeitsfläche neben einem Container variabel anzupassen. So kann bei Bedarf beispielsweise die Arbeitsfläche vergrößert werden, um mehreren Bedienpersonen zu ermöglichen, gleichzeitig an einem Container zu arbeiten. Ebenso kann der Abstand zwischen Container und Entladeband verkleinert werden, um beispielsweise die Wege für das Bedienpersonal zwischen Container und Entladeband zu verkleinern.

Insbesondere kann in einer Ausgestaltung vorgesehen sein, dass mehrere Entladeboxen und/oder Beladeboxen in einer Ebene entlang einer geradlinigen Reihe nebeneinanderliegend angeordnet sind, wobei vorzugsweise vorgesehen ist, dass die Entladebänder in den Entladeboxen parallel zu den Längsseiten der zu entladenden Container verlaufen.

Insbesondere kann das Haupttransportband in einer Ebene oberhalb einer Reihe von Beladeboxen angeordnet sein, um ein schwerkraftunterstütztes Transportieren von Stückgut von dem Haupttransportband zu den Beladeboxen zu ermöglichen. Gleichzeitig werden kurze Wege ermöglicht, indem die Entladeboxen in derselben Ebene mit dem Haupttransportband angeordnet sind.

Eine effiziente Flächennutzung ergibt sich, indem in einer Ausgestaltung vorgesehen sein kann, dass an einem Anfang und/oder an einem Ende einer Reihe von Entladeboxen und/oder Beladeboxen eine Übergabestation zum Beladen und/oder Entladen eines Fahrzeugs mit einem Container angeordnet ist. Insbesondere ist dabei vorgesehen, dass die Containertransporteinrichtung zum Transportieren eines Containers von der Übergabestation oder zu der Übergabestation ausgebildet ist. Insbesondere ist eine Übergabestation an den Stirnseiten eines Gebäudes auf Höhe einer Reihe von Entlade- und/oder Beladeboxen angeordnet. An der Übergabestation wird mittels eines Fahrzeugs ein Container angeliefert. Die Containertransporteinrichtung entnimmt diesen Container von dem Fahrzeug, hebt diesen an und transportiert denselben zu der entsprechenden Entladebox, um den Container zu entladen. Alternativ kann an der Übergabestation ein Fahrzeug auch mit einem Container beladen werden, indem die Containertransporteinrichtung einen Container aus einer Beladebox entnimmt und zu dem Fahrzeug transportiert. Vorzugsweise kann sowohl am Anfang wie auch am Ende einer Reihe von Entladeboxen und/oder Beladeboxen eine Übergabestation angeordnet sein. Damit kann ein Gebäude mit der erfindungsgemäßen Vorrichtung beispielsweise vier Übergabestationen aufweisen.

In einer vorteilhaften Ausgestaltung kann vorgesehen sein, dass zwischen zwei benachbarten Entladeboxen ein Entladeband angeordnet ist, welches von beiden Entladeboxen gemeinsam nutzbar ist. Dadurch ergibt sich eine besonders effektive Ausnutzung der Fläche, indem zum Entladen von zwei Containern dasselbe, zwischen diesen Containern liegende Entladeband genutzt wird.

In einer Ausgestaltung kann vorgesehen sein, dass die Containertransporteinrichtung einen Laufkran aufweist, der sich entlang der Reihe von Entladeboxen erstreckt und die Container zum Transport anhebt und in einer Ebene oberhalb der Entladeboxen transportiert.

Vorzugsweise können die Beladeboxen an das Sortierband angeschlossen sein, indem vorgesehen ist, dass das Sortierband mehrere von dem Haupttransportband abzweigende Beladerampen aufweist, um Stückgut zu den Beladeboxen zu transportieren, wobei die Beladerampen ein Gefälle aufweisen, um Stückgut schwerkraftunterstützt oder schwerkraftbasiert zu einer Beladebox zu fördern.

Weiter ergibt sich eine effiziente Flächennutzung, indem in einer Ausgestaltung vorgesehen sein kann, dass Entladeboxen mehrstöckig, vorzugsweise in wenigstens zwei Ebenen übereinander angeordnet sind. Beispielsweise kann vorgesehen sein, dass mehrere Beladeboxen in einer Ebene mit mehreren Entladeboxen angeordnet sind, und/oder dass mehrere Beladeboxen in einer Ebene unterhalb von Entladeboxen angeordnet sind. Insbesondere kann die erfindungsgemäße Vorrichtung als zweistöckiges oder mehrstöckiges Paketverteilzentrum ausgebildet sein.

Ein effizientes Handling von Stückgut ergibt sich, indem in einer Ausgestaltung vorzugsweise vorgesehen ist, dass das Haupttransportband mit den Entladeboxen im Wesentlichen in einer Ebene verläuft. In einer Ebene können die Beladeboxen und/oder die Entladeboxen jeweils in einer Reihe geradlinig nebeneinanderliegend bzw. hintereinanderliegend angeordnet sein. Insbesondere verlaufen dabei die Längsseiten der einzelnen Container parallel zueinander.

Eine kompakte Bauweise ergibt sich weiterhin, indem beispielsweise vorgesehen ist, dass das Haupttransportband seitlich an der Reihe der Entladeboxen und/oder Beladeboxen entlanglaufend derart angeordnet ist, dass es mehrere, vorzugsweise alle, Entladeboxen und/oder Beladeboxen miteinander verbindet. Dabei kann vorgesehen sein, dass das Haupttransportband als geschlossen umlaufendes Transportband ausgebildet ist, vorzugsweise auf einer rechteckigen Grundfläche eines Gebäudes angeordnet und umlaufend ausgebildet ist. Insbesondere ist bei einer mehrstöckigen Anordnung der Entladeboxen oberhalb von Beladeboxen das Haupttransportband auf einer oberen Ebene angeordnet. Vorzugsweise in derselben Ebene wir die Entladeboxen.

Eine kompakte Bauweise ergibt sich insbesondere auch dadurch, dass beispielsweise an beiden Längsseiten des Haupttransportbands anschließend jeweils eine geradlinige Reihe Entladeboxen und/oder eine geradlinige Reihe Beladeboxen angeordnet sind. Das heißt zu beiden Längsseiten des Haupttransportbandes erstreckt sich jeweils eine Reihe von Entladeboxen und/oder Beladeboxen.

Um eine effiziente automatische Sortierung des Stückguts zu ermöglichen, ist insbesondere vorgesehen, dass das Sortierband eine Steuervorrichtung und eine Ausschleuseeinrichtung und eine Leseeinrichtung aufweist. Dabei ist vorgesehen, dass die Leseeinrichtung eine Zieladresse eines Stückguts oder eines Pakets erfasst und die Steuervorrichtung die Ausschleuseeinrichtung derart ansteuert, dass diese das Stückgut oder das Paket selektiv an eine seiner Zieladresse entsprechende Beladebox transportiert.

Insbesondere ist vorgesehen, dass die Steuervorrichtung die Vorrichtung zum Umschlagen und/oder Sortieren von Stückgut ansteuert, so dass ein effizientes und fehlerfreies Sortieren und/oder Umschlagen des Stückguts von einem Container in einen anderen weitgehend automatisch erfolgt.

Der Gegenstand der Erfindung umfasst ferner ein Verfahren zum Umschlagen und/oder Sortieren von Stückgut, wobei Stückgut in einem ersten Container von einem Fahrzeug angeliefert wird und das Stückgut mit der erfindungsgemäßen Vorrichtung sortiert oder umgeschlagen und in einen zweiten Container verladen wird. Anschließend wird der zweiten Container auf ein Fahrzeug verladen und an eine Zieladresse transportiert.

Insbesondere ist vorgesehen, dass das Entladen des ersten Containers von zwei gegenüberliegenden Seiten, vorzugsweise von beiden Längsseiten, gleichzeitig durchgeführt wird. Dadurch wird die benötigte Zeit zum Sortieren oder Umschlagen des Stückguts verringert. Ebenfalls kann die benötigte Durchlaufzeit verringert werden, indem vorzugsweise vorgesehen ist, dass auch das Beladen des zweiten Containers von zwei Seiten gleichzeitig durchgeführt wird.

Ein effizientes Handling der Container ergibt sich, indem in einer Ausgestaltung vorgesehen ist, dass der erste Container nach dem Entladen von einer Entladebox zu einer Beladebox transportiert wird, vorzugsweise ohne den Container dabei auf ein Fahrzeug zu laden.

Von Vorteil ist, wenn als Container ISO-Container oder Wechselbrücken-Container verwendet werden, die an ihren gegenüberliegenden Längsseiten jeweils eine Klappe oder Türe zum beidseitigen Öffnen und/oder Verschließen des Containers aufweisen.

Eine Anwendung des erfindungsgemäßen Gegenstandes kann beispielsweise in der Logistikbranche als Paketverteilzentrum erfolgen. Weiter ist der Gegenstand der Erfindung bei einem Herstellungsprozess zur Steuerung eines Warenflusses anwendbar, um eine effiziente Herstellung und Bereitstellung verschiedener Waren und/oder Rohstoffe für eine Produktion zu ermöglichen. Von Vorteil ist, dass die erfindungsgemäße Vorrichtung mit geringen Durchlaufzeiten und damit ohne größere Lagerhaltungskapazität auskommt. Dies ermöglicht einerseits einen schnellen Umschlag von Stückgut und verringert andererseits die Lager- und/oder Vorhaltekosten von Material.

Eine beispielhafte Ausgestaltung der Erfindung ist in den Figuren dargestellt und nachfolgend beschrieben. Dabei zeigen:
- Fig.1:: Eine schematische 3D Darstellung einer Vorrichtung zum Umschlagen und/oder Sortieren von Stückgut, insbesondere Paketen;
- Fig. 2:: Eine Draufsicht der in Figur 1 dargestellten Vorrichtung;
- Fig. 3:: Einen Teil der Seitenansicht der Vorrichtung;
- Fig. 4:: Eine Detailvergrößerung im Bereich von Entladeboxen;
- Fig. 5:: Eine vergrößerte Darstellung im Bereich von Entladeboxen mit Containertransporteinrichtung.

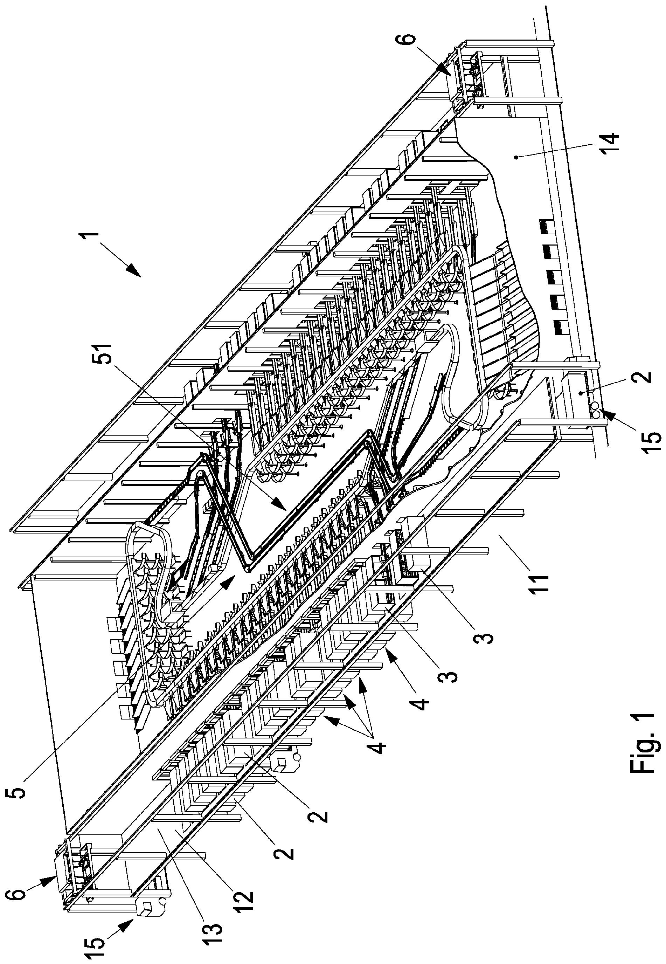

In den Figuren 1 bis 5 ist ein Ausführungsbeispiel der Vorrichtung 1 zum Umschlagen und/oder Sortieren von Stückgut dargestellt. Bei diesem Ausführungsbeispiel handelt es sich um ein Paketverteilzentrum für Dienstleister in der Logistikbranche.

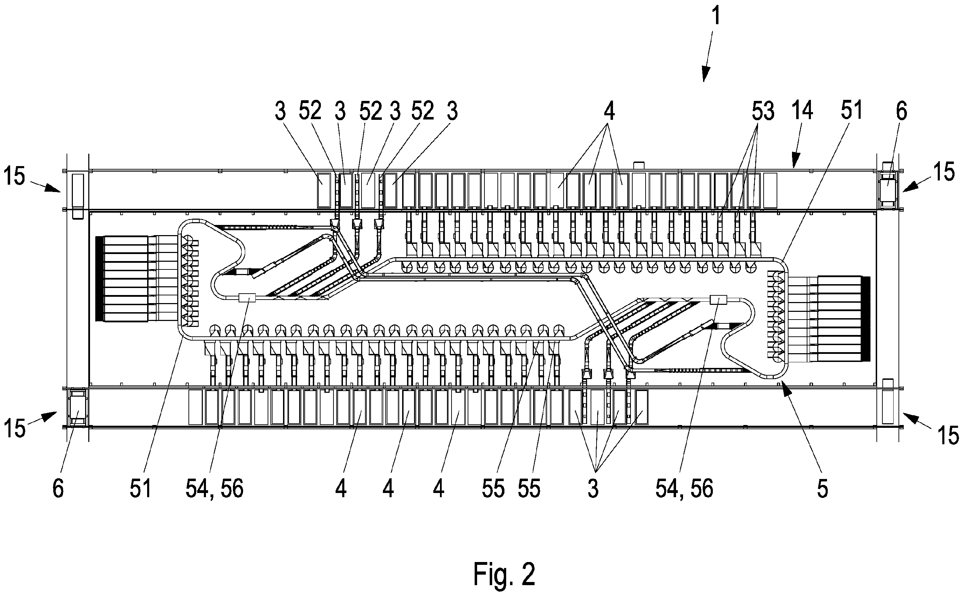

Das Paketverteilzentrum 1 ist in einem Gebäude 14 untergebracht. Die Fig. 1 zeigt eine schematische dreidimensionale Darstellung des erfindungsgemäßen Paketverteilzentrums 1. Die Fig. 2 zeigt eine Draufsicht auf das Paketverteilzentrum 1. Das Paketverteilzentrum 1 umfasst im zentralen Teil des Gebäudes 14 auf einer in etwa rechteckigen Grundfläche ein Sortierband 5 zum Sortieren von Stückgut 21 bzw. einzelnen Paketen 21. Das Sortierband 5 weist ein Haupttransportband 51 auf, welches als endlos umlaufendes Transportband ausgebildet und innerhalb des Gebäudes 14 angeordnet ist. Ferner zweigen von dem Haupttransportband 51 mehrere Entladebänder 52 und Beladerampen 53 ab.

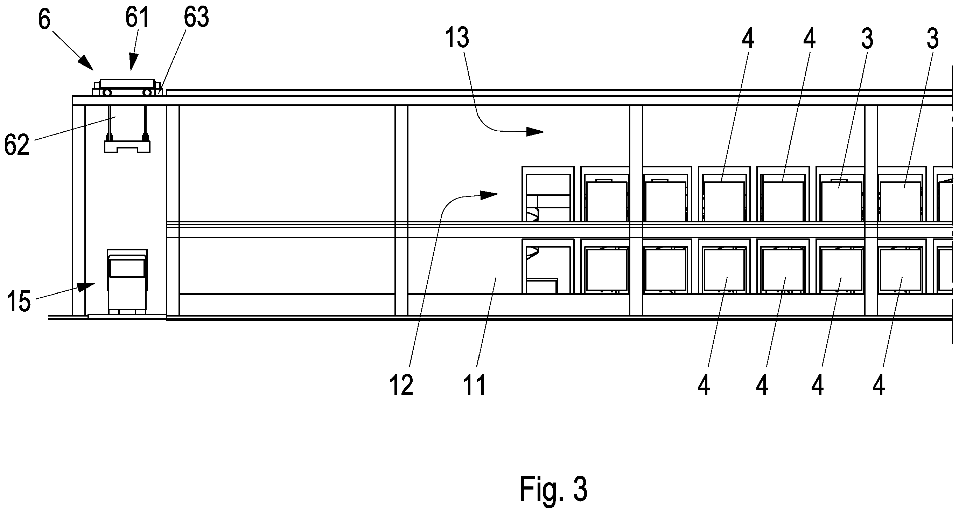

An beiden Längsseiten des Gebäudes 14 sind zwei vertikal übereinanderliegende Reihen von Entladeboxen 3 bzw. Beladeboxen 4 angeordnet. Wie aus Figur 3 ersichtlich, sind in der untersten Ebene 11, d.h. direkt auf der Grundfläche des Gebäudes 14, eine Reihe mit Beladeboxen 4 angeordnet. In der Ebene 12, die oberhalb der Reihe Beladeboxen 4 angeordnet ist, sind mehrere Entladeboxen 3 sowie Beladeboxen 4 in einer geradlinigen Reihe angeordnet. Jede Beladebox 4 wie auch jede Entladebox ist dazu ausgebildet genau einen Container 2 aufzunehmen.

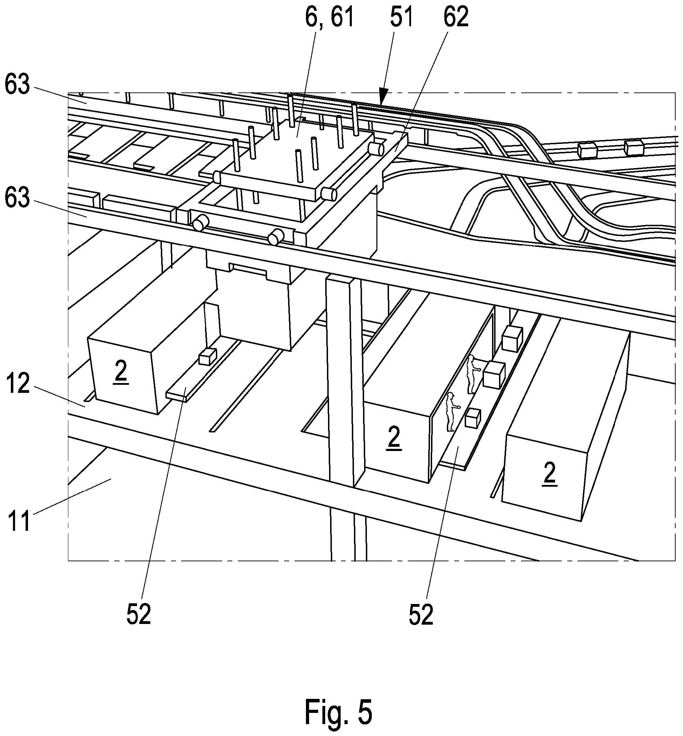

Eine Containertransporteinrichtung 6 ist vorgesehen, um einzelne Container 2 von einer stirnseitig an dem Gebäude 14 angeordneten Übergabestation 15 abzuholen bzw. zu dieser Übergabestation 15 zu verbringen. Die Containertransporteinrichtung 6 umfasst einen Laufkran 61 mit einer Laufkatze 62, welche entlang zweier paralleler Laufschienen 63 beweglich ist, wie in Fig. 5 dargestellt. Mit Hilfe der Containertransporteinrichtung 6 können Container 2 nicht nur transportiert, sondern auch ausgerichtet und entsprechend platziert werden. Ein aufwändiges rangieren der Container 2 per Fahrzeug kann somit entfallen.

Wie aus den Figuren 1 und 3 ersichtlich, weist das Paketverteilzentrum einen mehrstöckigen Aufbau auf. An der unteren Ebene 11 sind hauptsächlich Beladeboxen 4 angeordnet. Auf der darüber liegenden Ebene 12 sind Entladeboxen 3 sowie auch Beladeboxen 4 angeordnet. Ferner ist im Bereich der Ebene 12, d.h. auf gleichem Niveau wie die Entladeboxen, das Haupttransportband 51 des Sortierbandes 5 angeordnet. Dies hat den Vorteil, dass die aus den Containern der Entladeboxen 3 entnommenen Pakete 21 auf direktem Wege und ohne einen Höhenunterschied überwinden zu müssen auf das Haupttransportband 51 gelangen. In einer oberen Ebene 13 erfolgt ein Transport der Container 2 durch den Laufkran 61 der Containertransportvorrichtung 6.

Wie in Fig. 2 dargestellt, ist das Haupttransportband 51 als geschlossen umlaufendes Förderband ausgebildet. Es verbindet alle Entladeboxen 3 und alle Beladeboxen 4 untereinander. Der Anschluss der Entladeboxen 3 an das Hauptsortierband 51 erfolgt mittels Entladebändern 52. Der Anschluss der Beladeboxen 4 an das Haupttransportband 51 erfolgt über Beladerampen 53. Die Beladerampen 53 weisen ein von dem Haupttransportband 51 zu den tieferliegenden Beladeboxen 4 weisendes Gefälle auf, um Stückgut schwerkraftunterstützt von dem Haupttransportband 51 zu einer Beladebox 4 zu verbringen. Das Haupttransportband 51 weist an dem Anschlusspunkt einer Beladerampe 53 oder eines Entladebandes 52 eine Weiche auf.

Im Falle der Beladerampe 53 schleust diese Weiche als Ausschleuseeinrichtung 55 einzelne Pakete 21 aus dem Förderstrom des Haupttransportbandes 51 aus und leitet diese zu der entsprechenden Beladebox 4.

Im Falle des Entladebandes 52 ist eine Paketvereinzelungsvorrichtung vorgesehen, die mittels Lichtschranken verhindert, dass es bei dem Einschleusen von Paketen 21 auf dem Haupttransportband 51 zu Kollisionen kommt.

Außerdem weist das Haupttransportband 51 eine Steuerungseinrichtung 54 sowie eine Leseeinrichtung 56 auf. Die Leseeinrichtung 56 weist eine Barcode- oder 3D-Code-Leseeinrichtung und/oder eine RFID-Leseeinrichtung auf. Anhand dieser Leseeinrichtung kann ein an einem Paket 21 angebrachter Adresscode ausgelesen und der Steuereinrichtung 54 übergeben werden. Die Steuereinrichtung 54 steuert entsprechend der Adresse das Paketstück zu einer bestimmten Beladebox 4. Eine Beladebox 4 steht dabei beispielsweise für einen bestimmten Zustellbezirk, dem mehrere Adressen zugeordnet sind.

Jede der Entladeboxen 3 ist dazu ausgebildet, einen einzelnen Container 2 aufzunehmen. Analog ist jede der Beladeboxen 4 dazu ausgebildet, einen einzelnen Container 2 aufzunehmen. Als Container 2 werden insbesondere Wechselbrückencontainer verwendet, die sowohl an ihren beiden Längsseiten über Klappen und/oder Türen geöffnet werden können, als auch an zumindest einer ihrer Stirnseiten offenbar sind. Dadurch ist es möglich, einen Container 2 zugleich von wenigstens zwei Seiten zu beladen und/oder entladen, was zu einer deutlichen Reduktion der notwenigen Ladezeiten führt.

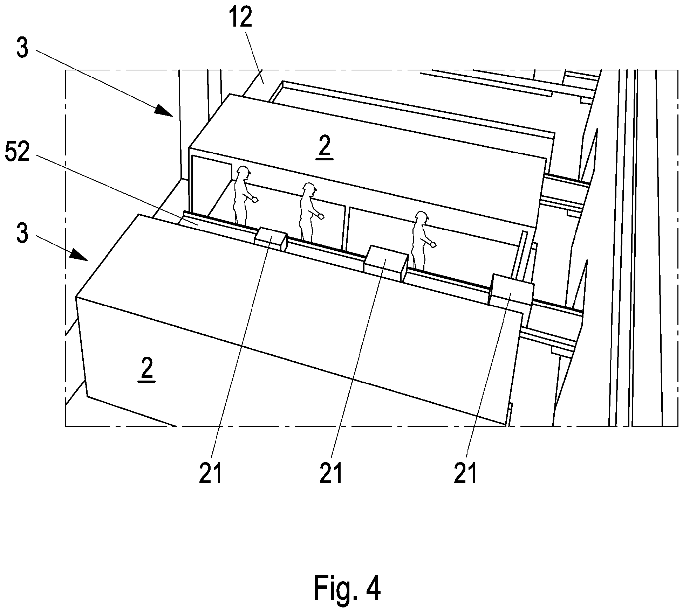

In den Figuren 4 und 5 ist eine Ausschnittsvergrößerung aus dem Bereich der Entladeboxen 3 schematisch dargestellt. Jede der Entladeboxen 3 beinhaltet einen Wechselbrückencontainer 2. Neben jedem Wechselbrückencontainer 2 ist ein Entladeband 52 angeordnet, welches entlang der Längsseite des Wechselbrückencontainers 2 verläuft. Vorteilhafterweise teilen sich zwei Entladeboxen 3 jeweils ein dazwischenliegendes Entladeband 52, was insgesamt zu einem reduzierten Platzbedarf führt. Um eine effiziente Platzausnutzung und Entladung sicherzustellen, ist vorgesehen, dass das Entladeband 52 in einer Entladebox 3 quer zu seiner Transportrichtung verschiebbar ist, um den Abstand zwischen Container 2 und Entladeband 52 einzustellen. Wie in den Figuren 4 und 5 schematisch dargestellt ist, kann ein Container gleichzeitig von mehreren Personen entladen werden. In den Figuren 4 und 5 sind beispielsweise drei Personen dargestellt, die zugleich mit der Entladung eines Containers 2 betraut sind.

Nachdem ein Container 2 in der Entladebox 3 vollständig entladen wurde, wird dieser Container 2 von der Containertransporteinrichtung 6 aus der Entladebox 3 angehoben und zu einer Beladebox 4 geführt. In der Beladebox 4 wird der Container 2 daraufhin mit Stückgut bzw. mit Paketen 21 beladen. Die Beladung in der Beladebox 4 kann dabei auf herkömmliche Art und Weise von der Längsseite des Containers her erfolgen. Alternativ kann die Beladebox 4 wie auch die Entladebox 3 ein oder mehrere Beladebänder aufweisen, das sich bzw. die sich entlang der Längsseite des Containers 2 erstrecken. Mit solchen Beladebändern ist es möglich, den Container 2 in der Beladebox von beiden Längsseiten her zu beladen. Dadurch wird die Beladezeit des Containers 2 in der Beladebox 4 reduziert. Selbstverständlich ist auch vorgesehen, dass die Beladebänder quer zu ihrer Transportrichtung verstellbar sind, um den Abstand zwischen Container 2 und Beladeband einzustellen.

Aufgrund der erhöhten Entladekapazität kann die Anzahl von Entladeboxen 2 deutlich geringer sein als die Anzahl an Beladeboxen 4. Beispielsweise kann die Anzahl an Beladeboxen 4 wenigstens dreimal oder viermal so groß sein als die Anzahl an Entladeboxen 3.

Nach dem vollständigen Beladen des Containers 2 in der Beladebox 4 wird der Container 2 von der Containertransporteinrichtung 6 aufgenommen und zu einem an einer Übergabestation 15 wartenden Fahrzeug transportiert. Der Container 2 wird auf dieses Fahrzeug verbracht und von dem Fahrzeug abtransportiert.

Über das gesteuerte und koordinierte Handling der einzelnen Container 2 mit der Containertransporteinrichtung 6 wird eine effiziente Nutzung des Bauraums des Paketverteilzentrums 1 erzielt. Durch den Einsatz der Containertransporteinrichtung 6 ist es nicht notwendig, jeden Container mit einem Fahrzeug direkt an eine Entladebox 3 zu rangieren oder per Fahrzeug von einer Beladebox 4 abzuholen. Dadurch wird ein mehrstöckiger Aufbau des Paketverteilzentrums 1 möglich, sodass die Grundfläche des Paketverteilzentrums 1 effizient ausgenutzt wird.

So ist es möglich, mit einer erfindungsgemäßen Vorrichtung gegenüber herkömmlichen Paketverteilzentren bei gleicher oder sogar reduzierter Grundfläche einen gesteigerten Durchsatz bei gleichzeitig reduzierter Umschlagzeit zu erreichen.

### Bezugszeichenliste

- 1: Vorrichtung zum Umschlagen und/oder Sortieren von Stückgut
- 11: untere Ebene
- 12: erste Ebene
- 13: obere Ebene
- 14: Gebäude
- 15: Übergabestation
- 2: Container
- 21: Stückgut
- 3: Entladebox
- 4: Beladebox
- 5: Sortierband
- 51: Haupttransportband
- 52: Entladeband
- 53: Beladerampe
- 54: Steuervorrichtung
- 55: Ausschleuseeinrichtung
- 56: Leseeinrichtung
- 6: Containertransporteinrichtung
- 61: Laufkran
- 62: Laufkatze
- 63: Laufschiene

## Patentansprüche

1. Vorrichtung zum Umschlagen und/oder Sortieren von Stückgut (21), wobei das Stückgut (21) in Container (2) verladen und/oder aus Container (2) entladen wird, umfassend
mehrere Beladeboxen (4) um einen Container (2) mit Stückgut (21) zu beladen,
mehrere Entladeboxen (3) um Stückgut (21) aus einem Container (2) zu entladen,
ein Sortierband (5), um Stückgut (21) von einer Entladebox (3) zu einer Beladebox (4) zu transportieren,
eine Containertransporteinrichtung (6), um Container (2) zwischen einem Fahrzeug und/oder einer Entladebox (3) und/oder einer Beladebox (4) zu transportieren,
wobei das Sortierband (5) ein Haupttransportband (51) und mehrere von diesem abzweigende Entladebänder (52) aufweist, die eine Entladebox (3) an das Haupttransportband (51) anschließen,
**dadurch gekennzeichnet,**
**dass** eine Entladebox (3) jeweils zumindest ein Entladeband (52) aufweist, welches so angeordnet ist, dass es entlang einer Längsseite eines in der Entladebox (3) befindlichen Containers (2) verläuft und quer verschiebbar ausgebildet ist, um den Abstand zwischen Container (2) und dem Entladeband (52) einzustellen.

2. Vorrichtung nach Anspruch 1,
**dadurch gekennzeichnet,**
**dass** eine Entladebox (3) zwei zueinander parallel verlaufende und voneinander beabstandete Entladebänder (52) aufweist, die derart voneinander beabstandet sind, dass ein Container (2) zwischen den beiden Entladebändern anordenbar ist.

3. Vorrichtung nach einem der Ansprüche 1 oder 2,
**dadurch gekennzeichnet,**
**dass** mehrere Entladeboxen (3) und/oder Beladeboxen (4) in einer Ebene (12) entlang einer geradlinigen Reihe nebeneinanderliegend angeordnet sind, wobei vorzugsweise vorgesehen ist, dass die Entladebänder (52) in den Entladeboxen (3) parallel zu den Längsseiten der zu entladenden Container (2) verlaufen.

4. Vorrichtung nach einem der vorhergehenden Ansprüche,
**dadurch gekennzeichnet,**
**dass** an einem Anfang und/oder an einem Ende einer Reihe von Entladeboxen (3) und/oder Beladeboxen (4) eine Übergabestation (15) zum Beladen und/oder Entladen eines Fahrzeugs mit einem Container (2) angeordnet ist, wobei vorzugsweise vorgesehen ist, dass die Containertransporteinrichtung (6) zum Transportieren eines Containers (2) von der Übergabestation (15) oder zu der Übergabestation (15) ausgebildet ist.

5. Vorrichtung nach einem der vorhergehenden Ansprüche,
**dadurch gekennzeichnet,**
**dass** zwischen zwei benachbarten Entladeboxen (3) ein Entladeband (52) angeordnet ist, welches von beiden Entladeboxen (3) gemeinsam nutzbar ist.

6. Vorrichtung nach einem der vorhergehenden Ansprüche,
**dadurch gekennzeichnet,**
**dass** das Sortierband (5) mehrere von dem Haupttransportband (51) abzweigende Beladerampen (53) aufweist, um Stückgut (21) zu den Beladeboxen (4) zu transportieren, wobei die Beladerampen (53) ein Gefälle aufweisen, um Stückgut (21) schwerkraftunterstützt oder schwerkraftbasiert zu einer Beladebox (4) zu fördern.

7. Vorrichtung nach einem der vorhergehenden Ansprüche,
**dadurch gekennzeichnet,**
**dass** Entladeboxen (3) in mehrstöckig, vorzugsweise in wenigstens zwei Ebenen übereinander angeordnet sind, und/oder dass mehrere Beladeboxen (4) in einer Ebene (12) mit mehreren Entladeboxen (3) angeordnet sind, und/oder dass mehrere Beladeboxen (4) in einer Ebene (11) unterhalb von Entladeboxen (3) angeordnet sind.

8. Vorrichtung nach einem der vorhergehenden Ansprüche,
**dadurch gekennzeichnet,**
**dass** das Haupttransportband (51) mit den Entladeboxen (3) im Wesentlichen in einer Ebene (12) verläuft, wobei vorzugsweise vorgesehen ist, dass die Beladeboxen (4) und/oder die Entladeboxen (3) jeweils in einer Reihe geradlinig nebeneinanderliegend angeordnet sind.

9. Vorrichtung nach einem der vorhergehenden Ansprüche,
**dadurch gekennzeichnet,**
**dass** das Haupttransportband (51) seitlich an der Reihe der Entladeboxen (3) und/oder Beladeboxen (4) entlanglaufend derart angeordnet ist, dass es mehrere, vorzugsweise alle, Entladeboxen (3) und/oder Beladeboxen (4) miteinander verbindet.

10. Vorrichtung nach einem der vorhergehenden Ansprüche,
**dadurch gekennzeichnet,**
**dass** das Haupttransportband (51) als geschlossen umlaufendes Transportband ausgebildet ist, vorzugsweise auf einer rechteckigen Grundfläche eines Gebäudes (14) angeordnet und umlaufend ausgebildet ist, wobei vorzugsweise vorgesehen ist, dass an beiden Längsseiten des Haupttransportbands (51) anschließend jeweils eine geradlinige Reihe Entladeboxen (3) und/oder eine geradlinige Reihe Beladeboxen (4) angeordnet sind.

11. Vorrichtung nach einem der vorhergehenden Ansprüche,
**dadurch gekennzeichnet,**
**dass** das Sortierband (5) eine Steuervorrichtung (54) und eine Ausschleuseeinrichtung (55) und eine Leseeinrichtung (56) aufweist, wobei die Leseeinrichtung (56) eine Zieladresse eines Stückguts (21) erfasst und die Steuervorrichtung (54) die Ausschleuseeinrichtung (55) derart ansteuert, dass diese ein Stückgut (21) selektiv an eine seiner Zieladresse entsprechende Beladebox (4) ausschleust.

12. Verfahren zum Umschlagen und/oder Sortieren von Stückgut (21), wobei Stückgut (21) in einem ersten Container (2) von einem Fahrzeug angeliefert wird und das Stückgut (21) mit einer Vorrichtung (1) nach einem der vorhergehenden Ansprüche sortiert oder umgeschlagen und in einen zweiten Container (2) verladen wird und anschließend der zweite Container (2) auf ein Fahrzeug verladen und an eine Zieladresse transportiert wird.

13. Verfahren nach Anspruch 12,
**dadurch gekennzeichnet,**
**dass** das Entladen des ersten Containers (2) von zwei Seiten gleichzeitig durchgeführt wird, und/oder dass das Beladen des zweiten Containers (2) von zwei Seiten gleichzeitig durchgeführt wird.

14. Verfahren nach einem der Ansprüche 12 oder 13,
**dadurch gekennzeichnet,**
**dass** der erste Container (2) nach dem Entladen von einer Entladebox (3) zu einer Beladebox (4) transportiert wird, vorzugsweise ohne den Container (2) dabei auf ein Fahrzeug zu laden.

15. Verfahren nach einem der Ansprüche 12 bis 14,
**dadurch gekennzeichnet,**
**dass** als Container (2) Wechselbrücken-Container verwendet werden, die an ihren gegenüberliegenden Längsseiten jeweils eine Klappe oder Türe zum beidseitigen Öffnen und/oder Verschließen des Containers (2) aufweisen.

## Claims

1. Device for handling and/or sorting cargo (21), wherein the cargo (21) is loaded into containers (2) and/or unloaded from containers (2), comprising:
several loading boxes (4) for loading a container (2) with cargo (21),
several unloading boxes (3) for unloading cargo (21) from a container (2),
a sorting belt (5) for transporting cargo (21) from an unloading box (3) to a loading box (4),
a container transport device (6) for transporting containers (2) between a vehicle and/or an unloading box (3) and/or a loading box (4),
wherein the sorting belt (5) has a primary transport belt (51) and several unloading belts (52) branching off therefrom, said unloading belts connecting an unloading box (3) to the primary transport belt (51),
**characterised in that**
an unloading box (3) has at least one respective unloading belt (52) that is arranged in such a way that it runs along a longitudinal side of a container (2) located in the unloading box (3) and is designed to be transversely displaceable in order to adjust the distance between the container (2) and the unloading belt (52).

2. Device according to claim 1,
**characterised in that**
an unloading box (3) has two unloading belts (52) running parallel to each other and being spaced apart from each other, the unloading belts being spaced apart from each other in such a way that a container (2) is able to be arranged between the two unloading belts.

3. Device according to one of claims 1 or 2,
**characterised in that**
several unloading boxes (3) and/or loading boxes (4) are arranged in a plane (12) one alongside the other in a linear row, wherein provision is preferably made for the unloading belts (52) in the unloading boxes (3) to run parallel to the longitudinal sides of the containers (2) to be unloaded.

4. Device according to one of the preceding claims,
**characterised in that**
a transition station (15) for loading and/or unloading a vehicle with a container (2) is arranged at a start point and/or at an end point of a row of unloading boxes (3) and/or loading boxes (4), wherein provision is preferably made for the container transport device (6) to be designed for transporting a container (2) from the transition station (15) or to the transition station (15).

5. Device according to one of the preceding claims,
**characterised in that**
an unloading belt (52) is arranged between two adjacent unloading boxes (3), said belt being able to be used by two unloading boxes (3) together.

6. Device according to one of the preceding claims,
**characterised in that**
the sorting belt (5) has several loading ramps (53) branching off from the primary transport belt (51) in order to transport cargo (21) to the loading boxes (4), wherein the loading ramps (53) have a slope for conveying cargo (21) to a loading box (4) in a manner that is supported by or based on the force of gravity.

7. Device according to one of the preceding claims,
**characterised in that**
unloading boxes (3) are arranged one above the other in multi-level form, preferably on at least two planes, and/or several loading boxes (4) are arranged in a plane (12) with several unloading boxes (3), and/or several loading boxes (4) are arranged in a plane (11) beneath unloading boxes (3).

8. Device according to one of the preceding claims,
**characterised in that**
the primary transport belt (51) having the unloading boxes (3) runs substantially in one plane (12), wherein provision is preferably made for the loading boxes (4) and/or the unloading boxes (3) to each be arranged linearly one alongside the other in a row.

9. Device according to one of the preceding claims,
**characterised in that**
the primary transport belt (51) is arranged to run laterally along the row of unloading boxes (3) and/or loading boxes (4) in such a way that it connects several, preferably all, unloading boxes (3) and/or loading boxes (4) to one another.

10. Device according to one of the preceding claims,
**characterised in that**
the primary transport belt (51) is designed as transport belt that is closed at its periphery, preferably arranged on a rectangular base surface of a building (14) and designed to circulate, wherein provision is preferably made for a respective linear row of unloading boxes (3) and/or a linear row of loading boxes (4) to then be arranged on both longitudinal sides of the primary transport belt (51).

11. Device according to one of the preceding claims,
**characterised in that**
the sorting belt (5) has a control device (54) and an ejection device (55) and a reading device (56), wherein the reading device (56) records a target address of a piece of cargo (21), and the control device (54) controls the ejection device (55) in such a way that the ejection device selectively ejects a piece of cargo (21) onto a loading box (4) that corresponds to its target address.

12. Method for handling and/or sorting cargo (21), wherein cargo (21) is supplied in a first container (2) by a vehicle, and the cargo (21) is sorted or handled by a device (1) according to one of the preceding claims and is loaded into a second container (2), and then the second container (2) is loaded onto a vehicle and transported to a target address.

13. Method according to claim 12,
**characterised in that**
the unloading of the first container (2) is carried simultaneously from two sides, and/or the loading of the second container (2) is carried out simultaneously from two sides.

14. Method according to one of claims 12 or 13,
**characterised in that**
the first container (2) is transported, after the unloading, from an unloading box (3) to a loading box (4), preferably without loading the container (2) onto a vehicle thereby.

15. Method according to one of claims 12 to 14,
**characterised in that**
swap-body containers are used as containers (2), which each have a flap or doors on their opposite longitudinal sides for opening and/or closing the container (2) on both sides.

## Revendications

1. Dispositif de transbordement et/ou de tri d'articles (21), dans lequel les articles (21) sont chargés dans des containers (2) et/ou déchargés de containers (2), comprenant
plusieurs box de chargement (4) pour charger un container (2) avec des articles (21),
plusieurs box de déchargement (3) pour décharger des articles (21) à partir d'un container (2),
une bande de tri (5) pour transporter des articles (21) à partir d'un box de déchargement (3) vers un box de chargement (4),
un équipement de transport de containers (6) pour transporter des containers (2) entre un véhicule et/ou un box de déchargement (3) et/ou ou un box de chargement (4),
dans lequel la bande de tri (5) présente une bande de transport principale (51) et plusieurs bandes de déchargement (52) qui bifurquent à partir de celle-ci et qui raccordent un box de déchargement (3) à la bande de transport principale (51),
**caractérisé en ce**
**qu'**un box de déchargement (3) présente respectivement au moins une bande de déchargement (52) qui est disposée de telle sorte qu'elle est située le long d'un côté longitudinal d'un container (2) situé dans le box de déchargement (3) et est constituée de façon à pouvoir être déplacée transversalement pour régler la distance entre le container (2) et la bande de déchargement (52).

2. Dispositif selon la revendication 1,
**caractérisé en ce**
**qu'**un box de déchargement (3) présente deux bandes de déchargement (52) parallèles entre elles et espacées les unes des autres, qui sont espacées de telle sorte qu'un container (2) peut être disposé entre les deux bandes de déchargement.

3. Dispositif selon l'une des revendications 1 ou 2,
**caractérisé en ce que**
plusieurs box de déchargement (3) et/ou box de chargement (4) sont disposés de façon juxtaposée dans un plan (12) le long d'une rangée rectiligne, étant de préférence prévu que les bandes de déchargement (52) dans les box de déchargement (3) sont parallèles aux côtés longitudinaux des containers (2) à décharger.

4. Dispositif selon l'une des revendications précédentes,
**caractérisé en ce que,**
à un début et/ou à une fin d'une rangée de box de déchargement (3) et/ou de box de chargement (4), il est disposé un poste de transfert (15) destiné au chargement et/ou au déchargement d'un véhicule muni d'un container (2), étant de préférence prévu que l'équipement de transport de containers (6) est constitué pour le transport d'un container (2) à partir du poste de transfert (15) ou vers le poste de transfert (15).

5. Dispositif selon l'une des revendications précédentes,
**caractérisé en ce que,**
entre deux box de déchargement (3) voisins, il est disposé une bande de déchargement (52) qui peut être utilisée conjointement par les deux box de déchargement (3).

6. Dispositif selon l'une des revendications précédentes,
**caractérisé en ce que**
la bande de tri (5) présente plusieurs rampes de chargement (53) qui bifurquent à partir la bande de transport principale (51) pour transporter des articles (21) vers les box de chargement (4), dans lequel les rampes de chargement (53) présentent une pente pour déplacer les articles (21) vers un box de chargement (4) avec l'assistance de la force de la gravité ou sur la base de la force de la gravité.

7. Dispositif selon l'une des revendications précédentes,
**caractérisé en ce que**
des box de déchargement (3) sont disposés sur plusieurs étages, de préférence de façon superposée dans au moins deux plans, et/ou **en ce que** plusieurs box de chargement (4) sont disposés dans un plan (12) avec plusieurs box de déchargement (3), et/ou **en ce que** plusieurs box de chargement (4) sont disposés dans un plan (11) au-dessous de box de déchargement (3).

8. Dispositif selon l'une des revendications précédentes,
**caractérisé en ce que**
la bande de transport principale (51) avec les box de déchargement (3) est placée essentiellement dans un plan (12), étant de préférence prévu que les box de chargement (4) et/ou les box de déchargement (3) sont respectivement disposés de façon juxtaposée en ligne droite dans une rangée.

9. Dispositif selon l'une des revendications précédentes,
**caractérisé en ce que**
la bande de transport principale (51) est disposée latéralement en longeant la rangée des box de déchargement (3) et/ou des box de chargement (4) de telle sorte qu'elle raccorde plusieurs, de préférence tous les box de déchargement (3) et/ou box de chargement (4) les uns aux autres.

10. Dispositif selon l'une des revendications précédentes,
**caractérisé en ce que**
la bande de transport principale (51) est constituée en tant que bande de transport périphérique fermée, de préférence disposée sur une surface de base rectangulaire d'un bâtiment (14) et est constituée de façon périphérique, étant de préférence prévu que, à la suite des deux côtés longitudinaux de la bande de transport principale (51), il est disposé respectivement une rangée rectiligne de box de déchargement (3) et/ou une rangée rectiligne de box de chargement (4).

11. Dispositif selon l'une des revendications précédentes,
**caractérisé en ce que**
la bande de tri (5) présente un dispositif de commande (54) et un équipement d'éjection (55) et un équipement de lecture (56), l'équipement de lecture (56) détectant une adresse de destination d'articles (21), et le dispositif de commande (54) pilotant l'équipement d'éjection (55) de telle sorte que celui-ci éjecte des articles (21) de façon sélective vers un box de chargement (4) correspondant à leur adresse de destination.

12. Procédé de transbordement et/ou de tri d'articles (21), dans lequel des articles (21) sont délivrés dans un premier container (2) par un véhicule, et les articles (21) sont triés ou transbordés avec un dispositif (1) selon l'une des revendications précédentes et sont chargés dans un deuxième container (2), et ensuite le deuxième container (2) est chargé sur un véhicule et transporté vers une adresse de destination.

13. Procédé selon la revendication 12,
**caractérisé en ce que**
le déchargement du premier container (2) est effectué de deux côtés simultanément, et/ou **en ce que** le chargement du deuxième container (2) est effectué de deux côtés simultanément.

14. Procédé selon l'une des revendications 12 ou 13,
**caractérisé en ce que**
le premier container (2) est transporté après le déchargement à partir d'un box de déchargement (3) vers un box de chargement (4), de préférence sans charger à cette occasion le container (2) sur un véhicule.

15. Procédé selon l'une des revendications 12 à 14,
**caractérisé en ce que,**
en tant que container (2), il est utilisé des containers à caisses mobiles qui, sur leurs côtés longitudinaux opposés, présentent respectivement une trappe ou une porte pour l'ouverture et/ou la fermeture du container (2) des deux côtés.
